# FASCICULE DE BREVET EUROPEEN

(11) **EP 4 555 004 B1**
(45) Date de publication et mention de la délivrance du brevet: **22.04.2026**
(21) Numéro de dépôt: 23739576.9
(22) Date de dépôt: 11.07.2023
(51) Int. Cl.: C08J 3/05, C08J 7/04, B29C 71/02

(54) **PROCEDE DE PREPARATION DE FILM DE POLY-(BETA)-HYDROXYALCANOATE**
VERFAHREN ZUR HERSTELLUNG VON FILMEN AUS POLY-BETA-HYDROXYALKANOAT
METHOD FOR PREPARING POLY-BETA-HYDROXYALKANOATE FILMS

(30) Priorité: 13.07.2022 FR 2207238
(43) Date de publication de la demande: 21.05.2025
(73) Titulaire: Centre National de la Recherche Scientifique, 75016 Paris (FR); Université Grenoble Alpes, 38400 Saint-Martin-d'Hères (FR); Institut Polytechnique de Grenoble, 38000 Grenoble (FR)
(72) Inventeur: TRAMIS, Olivier, 95600 Eaubonne (FR); EL KISSI, Nadia, 38000 Grenoble (FR); ROUX, Denis, 38700 Corenc (FR)
(74) Mandataire: Santarelli
(86) Numéro de dépôt international: PCT/EP2023/069119
(87) Numéro de publication internationale: WO 2024/013134

(56) Documents cités:
- US-A1- 2001 024 631
- US-A1- 2016 009 914

## Description

La présente invention concerne un procédé de préparation de film de poly-β-hydroxyalcanoate (PHA) utilisable notamment pour la fabrication d'emballage à base de papier ou de carton.

Le développement d'emballages issus de matériaux biosourcés et recyclables est requis pour des raisons environnementales. Dans ce contexte, le PHA est un matériau filmogène biosourcé et recyclable intéressant. Généralement, la poudre de PHA est biosourcée, produite par des bactéries.

Le PHA peut être transformé en film par le dépôt d'une solution de PHA dans un solvant organique sur un substrat. L'évaporation du solvant forme un film. Cette technique est communément appelée « solvent casting » en anglais, et permet d'obtenir des films très fins, de l'ordre de 20 microns.

L'inconvénient majeur de cette technologie est que le PHA n'est soluble que dans des solvants chlorés (i.e., dichlorométhane, chloroforme), qui sont hautement toxiques. L'évaporation doit avoir lieu à des températures relativement élevées, de l'ordre de 80°C, sur des temps relativement longs, allant de 8 à 24 heures. La formation de films de PHA à partir de solutions chlorées requiert donc des équipements spécifiques, en plus de personnels spécialement formés pour manipuler ce genre de produits. Ces contraintes sanitaires entraînent des surcoûts non-négligeables afin de limiter les risques de pollution et d'intoxication des manipulateurs comme de l'environnement. Enfin, il faut s'assurer que le solvant chloré soit entièrement évaporé du film afin d'assurer une non-toxicité pour l'utilisateur final.

Les procédés de préparation de films de PHA à partir de solutions aqueuses sont rares. La demande WO 91/13207 décrit un procédé de préparation de papier revêtu ou imprégné comprenant :
- l'application sur un substrat, notamment un papier, d'un latex comprenant 15 à 25% en poids de PHA dans de l'eau,
- l'évaporation de l'eau du latex,
- le chauffage pour former un film par fusion du PHA.
Ce latex est une suspension colloïdale de PHA dans l'eau, les particules de PHA ayant un diamètre de 0,2 à 1,5 µm. La demande US 2016/009914 A1 décrit un procédé de préparation d'un film de PHA comprenant les étapes consistant à mélanger un PHA sous forme pulvérulente et une solution aqueuse pour obtenir une suspension.

Toutefois, ce procédé conduit à l'obtention de films de PHA épais, ce qui est un frein à son utilisation comme emballage.

La principale difficulté rencontrée avec le PHA est l'épaisseur des films obtenus, supérieurs à 100 µm d'après la littérature. Ceci freine l'utilisation industrielle du PHA pour fabriquer des emballages papier/cartons à base de PHA, car les films recherchés doivent avoir une épaisseur au moins 5 fois moins importantes, soit aux alentours de 20 microns.

L'obtention de films de PHA épais a deux sources : D'une part, les granulés de PHA disponibles dans le commerce ont généralement un diamètre moyen de 0,5 à 2 mm et les faire fondre conduit à la formation de films épais. D'autre part, les méthodes de production des films par injection ou extrusion de PHA conduisent également à des films épais.

Il existe un besoin de développer des films de PHA plus fins qui puissent être obtenus par un procédé ne mettant pas en oeuvre de solvant chloré.

A cet effet, l'invention concerne un procédé de préparation d'un film de PHA comprenant les étapes consistant à :
a) mélanger un PHA sous forme pulvérulente et de formule (I) suivante :

   H-[CHR-CH₂-COO]ₙ-H (I)

   dans laquelle
   - chaque R représente indépendamment un alkyle linéaire ou ramifié comprenant de 1 à 12 atomes de carbone,
   - n est un nombre entier supérieur ou égal à 2 représentant le nombre d'unités dans le PHA, à une solution aqueuse pour obtenir une suspension comprenant de 0,5 à 15% en poids, de préférence de 3 à 10% en poids, de PHA par rapport au poids de solution aqueuse,
b) laisser reposer la suspension de PHA, généralement de 10 secondes à 16 heures, ce par quoi une partie du PHA sédimente et un culot est obtenu, au-dessus duquel surnage un surnageant comprenant de 0,1 à 1,0% en poids de PHA par rapport au poids de solution aqueuse,
c) prélever au moins une partie du surnageant,
d) appliquer le surnageant prélevé sur au moins une partie plane et horizontale d'une surface d'un premier substrat,
e) évaporer l'eau du surnageant appliqué,
f) simultanément à l'étape e) ou après l'étape e), chauffer au moins une zone de la partie de la surface du premier substrat sur laquelle le surnageant a été appliqué, à une température de préférence :
   - supérieure à la (température de fusion spécifique du PHA + 5 °C), de préférence supérieure à la (température de fusion spécifique du PHA +15 °C), et
   - inférieure à la (température de dégradation du PHA - 10°C),
ce par quoi est obtenu un premier substrat dont ladite au moins une zone est recouverte d'un film de PHA.

Le procédé comprend une étape a) de mélange d'un PHA et d'une solution aqueuse pour obtenir une suspension.

Ce mélange peut être fait par toute méthode, par exemple par agitation magnétique ou ultrasons.

Le PHA utilisé à l'étape a) a la formule (I) suivante :

H-[CHR-CH₂-COO]ₙ-H (I)

dans laquelle :
- chaque R représente indépendamment un alkyle linéaire ou ramifié comprenant de 1 à 12 atomes de carbone, notamment de 1 à 6 atomes de carbone, de préférence de 1 à 3 atomes de carbone, et
- n est un nombre entier supérieur ou égal à 2 représentant le nombre d'unités dans le PHA.

Le PHA peut être un homopolymère. Dans ce cas, les groupes R de toutes les unités du polymère sont identiques. Des exemples d'homopolymères sont le PHB (poly(β-hydroxybutyrate) (R représentant alors un méthyle) et le PHV (poly(β-hydroxyvalérate) (R représentant alors un éthyle).

Le PHA peut être un copolymère. Dans ce cas, le PHA comprend au moins deux R différents l'un de l'autre. Par exemple, le PHBV est un copolymère du poly(β-hydroxybutyrate) et du poly(β-hydroxyvalérate). De préférence, le PHA est un copolymère du poly(β-hydroxybutyrate) et du poly(β-hydroxyvalérate) comprenant de 1 à 20% en poids d'unités hydroxyvalérate.

Le PHA est utilisé sous forme pulvérulente, avec un diamètre moyen de particules de 0,1 à 1 µm tel que mesuré par microscopie électronique (MEB). Un tel PHA est disponible dans le commerce, par exemple chez NaturePlast sous la référence PHI 003.

L'utilisation de granulés de PHA de diamètre moyen de 0,5 à 2 mm tel que mesuré par diffraction de la lumière à l'étape a) est à proscrire car ils ne permettent pas la formation d'un surnageant lorsque la suspension est laissée au repos à l'étape b). Les granulés sont trop gros et sédimentent, la concentration en PHA dans le surnageant est alors nulle ou quasi nulle.

Mélanger de 0,5 à 15% en poids (par rapport au poids de solution aqueuse) d'un PHA sous forme pulvérulente à une solution aqueuse, aboutit à la formation d'une suspension apte à former un surnageant comprenant de 0,1 à 1% en poids (de 1 g/L a 10 g/L, sachant que 1% en masse représente 10 g/L pour de l'eau) de PHA par rapport au poids de solution aqueuse, lorsque la suspension est laissée au repos.

La solution aqueuse utilisée à l'étape a) est généralement exempte de solvant chloré, de préférence exempte de solvant organique. De préférence, le procédé ne met pas en oeuvre de solvant chloré, et de manière particulièrement préférée, il ne met pas en oeuvre de solvant organique.

L'avantage du procédé est l'utilisation de l'eau comme solvant (en l'occurrence comme non-solvant, puisque le PHA est insoluble dans l'eau). Cela implique l'absence de risques d'empoisonnement pour les utilisateurs (manipulateurs, consommateurs), de risques de pollution environnementale et une réduction substantielle des coûts de production par rapport aux procédés mettant en oeuvre des solvants chlorés.

La solution aqueuse utilisée peut comprendre un ou plusieurs composants choisis parmi :
- des polymères, par exemple des polysaccharides, comme la pectine,
- des tensioactifs, de préférence des tensioactifs biosourcés, et/ou
- des sels, notamment des sels d'ions alcalins, alcalinoterreux ou métalliques, par exemple des ions calcium, magnésium.

De préférence, la solubilité dans l'eau de la (ou de chacun des composants lorsqu'il y en a plusieurs) est supérieure à 1g/L à 25°C. L'utilisation de composant soluble dans l'eau est préférée afin qu'ils soient répartis de façon homogène dans le film de PHA formé à l'issue du procédé.

La présence d'ions peut impacter le taux de cristallinité du film de PHA obtenu par le procédé. De préférence, le taux de cristallinité est inférieur ou égal à 40%. Un film de PHA amorphe est en effet préféré car il est plus souple.

La présence d'ions peut également impacter la cinétique de sédimentation lors de l'étape b).

Généralement, les ions monovalents n'influencent ni la cinétique de sédimentation du PHA, ni la taille des particules de PHA. Par contre, les ions divalents, tel que le magnésium (Mg²⁺) et le calcium (Ca²⁺) accélèrent la sédimentation du PHA, et peuvent modifier la taille des particules de PHA. Enfin, une combinaison d'ions divalent et monovalent donne des résultats similaires à ceux présentés. Quel que soient les ions, il est préférable de n'utiliser que des concentrations en ions inférieures à 0,01M. Au-delà, un dépôt d'ions peut se former, qui est susceptible de modifier fortement les propriétés mécaniques et barrières du film de PHA.

De préférence, la solution utilisée à l'étape a) est de l'eau, par exemple de l'eau du robinet, de l'eau déminéralisée ou de l'eau minérale.

Il est difficile, voire quasi impossible, de préparer des suspensions de PHA ayant des teneurs en PHA inférieures à 0,5% en poids par rapport au poids de solution aqueuse. En effet, le PHA étant hydrophobe, la mise en suspension en solution aqueuse de faibles quantités de PHA conduit à la formation de gros agglomérats de PHA, qui s'agglomèrent tous quasi immédiatement pour former un culot avec un surnageant quasi exempt de PHA. C'est pourquoi le procédé décrit dans la demande WO 91/13207 utilise une suspension (nommée latex dans la demande) de 15 à 25% en poids de PHA dans l'eau.

Cependant, les inventeurs ont découvert que, lorsqu'une solution saturée de PHA est préparée, c'est-à-dire une suspension de 0,5 à 15% en poids de PHA par rapport au poids de la solution aqueuse, une proportion substantielle du PHA sédimente sous forme de culot, mais une partie du PHA reste suspendue dans le surnageant pendant environ 16 heures.

Le procédé comprend une étape b) où la suspension de PHA est laissée au repos, ce par quoi une partie du PHA sédimente et un culot est obtenu, au-dessus duquel surnage un surnageant comprenant de 0,1 à 1,0% en poids de PHA.

La proportion en poids de PHA au sein du surnageant est généralement comprise de 0,1 à 1,0% en poids par rapport au poids de la solution aqueuse. Il s'agit de la proportion de PHA une fois l'étape b) de repos réalisée, mais donc également de la proportion de PHA dans le surnageant prélevé à l'étape c).

La durée de l'étape b) de repos est variable. Elle est généralement de 10 secondes à 16 heures. Une durée inférieure à 10 secondes conduit généralement à un surnageant dont la concentration massique en PHA sera trop élevée. Le film formé à la fin du procédé sera trop épais pour la plupart des applications souhaitées, notamment pour une utilisation comme emballage. Si on laisse reposer la suspension plus de 16 heures à l'étape b), la proportion en poids de PHA dans le surnageant devient trop faible et difficile à contrôler.

La durée de l'étape b) dépend de la solution utilisée à l'étape a). Lorsque de l'eau déminéralisé est utilisée, la durée est de préférence de 10 secondes à 16 heures, de préférence de 30 secondes à 1 heure, typiquement de 1 min à 20 min. Certains composants de la solution aqueuse peuvent impacter la cinétique de sédimentation du PHA. Par exemple, les ions calcium et/ou magnésium l'accélèrent. Lorsqu'une solution aqueuse comprenant des ions calcium et/ou magnésium est utilisée à l'étape a), la durée de l'étape b) est de préférence de 10 secondes à 30 minutes, typiquement de 30 secondes à 15 minutes. La durée appropriée pour l'étape b) peut être déterminée en étudiant la cinétique de sédimentation au vu de la solution aqueuse utilisée, sachant que la durée de l'étape b) doit être inférieure ou égale à la durée au bout de laquelle tout le PHA a sédimenté (la concentration de PHA dans le surnageant étant alors nulle).

Le diamètre D90 des particules de PHA présentes dans le surnageant prélevé à l'étape c) est généralement inférieur ou égal à 40 µm, tel que mesuré par diffraction de la lumière. Le diamètre D50 des particules de PHA présentes dans le surnageant prélevé à l'étape c) est généralement inférieur ou égal à 10 µm, tel que mesuré par diffraction de la lumière.

Le procédé comprend une étape c) consistant à prélever au moins une partie du surnageant, puis une étape d) consistant à appliquer le surnageant prélevé sur au moins une partie plane et horizontale d'une surface d'un premier substrat, puis une étape e) consistant à évaporer l'eau du surnageant appliqué.

L'étape e) d'évaporation peut être accélérée par chauffage, par exemple en plaçant le premier substrat dans un four, ou sur une plaque chauffante. La température de chauffage est de préférence inférieure à 100°C pour éviter l'ébullition de l'eau qui affecterait l'homogénéité de la poudre de PHA déposée.

Après évaporation de l'eau, un dépôt de poudre homogène se forme sur la partie de la surface sur laquelle le surnageant a été appliqué. La surface du premier substrat sur laquelle le surnageant prélevé est appliqué doit être plane et horizontale, sans quoi le surnageant s'écoule dans les zones les plus basses ou creuses et n'est pas réparti uniformément.

Afin de solidifier cette poudre, il est nécessaire de procéder à une étape de fonte, qui permet de former un film d'épaisseur généralement de 10 à 60 µm. Le procédé contient donc une étape f) consistant à chauffer au moins une zone de la partie de la surface du premier substrat sur laquelle le surnageant a été appliqué, à une température de préférence :
- supérieure à la (température de fusion spécifique du PHA + 5 °C), de préférence supérieure à la (température de fusion spécifique du PHA +15 °C), et
- inférieure à la (température de dégradation du PHA - 10°C),
ce par quoi est obtenu un premier substrat dont ladite au moins une zone est recouverte d'un film de PHA.

De préférence, la durée de l'étape f) est inférieure à 5 minutes afin de ne pas dégrader le film de PHA formé.

Les étapes e) et f) peuvent être simultanés. Dans ce cas, on évapore et on chauffe en même temps. La température de chauffage peut alors être supérieure à 100°C. Le surnageant est alors transformé directement en film, sans que la poudre de PHA ne soit formée. Par exemple, l'application d'une thermopresse ou d'un rouleau de calandrage sur la zone du premier substrat permet de mettre en oeuvre les étapes e) et f) de façon simultanée.

La zone du premier substrat chauffée à l'étape f) peut correspondre à la totalité de la surface sur laquelle le surnageant a été appliqué. Dans ce cas, le film formé à l'étape f) aura la forme de la partie de surface du substrat sur laquelle le surnageant a été appliqué. Tout le PHA déposé sur la surface est alors transformé en film.

Alternativement, la zone chauffée à l'étape f) peut être plus restreinte que la partie de surface du substrat sur laquelle le surnageant a été appliqué. Le film ne se forme que dans la zone chauffée, et le PHA reste sous forme de poudre dans la zone non chauffée. L'étape f) peut par exemple être mis en oeuvre avec un laser, qui ne cible que la(les) zone(s) souhaitées. Cette alternative permet ainsi d'obtenir des motifs.

Avantageusement, le film de PHA obtenu par le procédé selon l'invention a une épaisseur de 1 à 60 µm, typiquement de 2 à 50 µm, notamment de 3 à 30 µm, de préférence de 5 à 25 µm, telle que mesurée par microscopie électronique à balayage (MEB). De telles épaisseurs sont particulièrement adaptées pour l'emballage. Le film est généralement transparent lorsque son épaisseur est inférieure ou égale à 30 µm. Il a une couleur légèrement brunâtre pour des épaisseurs supérieures.

Le procédé peut comprendre une étape g) consistant à récupérer le film, c'est-à-dire à le séparer du premier substrat. Il est préférable de laisser le film reposer au moins 60 minutes à température ambiante (de l'ordre de 20°C) entre les étapes f) et g). Cette durée permet au PHA du film de cristalliser, ce qui favorise son décollement de la surface du premier substrat.

Avantageusement, le culot formé à l'étape b) peut être utilisé comme source de PHA pour former la suspension de PHA et la mise en oeuvre du procédé. Ainsi, il n'y a aucune perte de matière. Ainsi, dans un mode de réalisation, le procédé comprend les étapes consistant à :
a') après l'étape c), mélanger le culot, éventuellement avec la partie du surnageant n'ayant pas été prélevée à l'étape c), avec une solution aqueuse pour obtenir une deuxième suspension comprenant de 0,5 à 15% en poids, de préférence de 3 à 10% en poids, de PHA par rapport au poids de solution aqueuse,
b') laisser reposer la deuxième suspension de PHA de 10 secondes à 16 heures, ce par quoi un deuxième culot est obtenu, au-dessus duquel surnage un deuxième surnageant comprenant de 0,1 à 1,0% en poids de PHA par rapport au poids de solution aqueuse,
c') prélever au moins une partie du deuxième surnageant,
d') appliquer le deuxième surnageant prélevé sur au moins une partie plane et horizontale d'une surface d'un deuxième substrat,
e') évaporer l'eau du deuxième surnageant appliqué,
f') simultanément à l'étape e') ou après l'étape e'), chauffer au moins une zone de la partie de la surface du deuxième substrat sur laquelle le deuxième surnageant a été appliqué, de préférence à une température :
   - supérieure à la (température de fusion spécifique du PHA + 5 °C), de préférence supérieure à la (température de fusion spécifique du PHA +15 °C), et
   - inférieure à la (température de dégradation du PHA - 10°C), ce par quoi est obtenu un deuxième substrat dont ladite au moins une zone est recouverte d'un film de PHA.

Les modes de réalisation décrits ci-dessus et ci-dessous pour le premier substrat et pour le premier surnageant s'appliquent également pour le deuxième substrat et pour le deuxième surnageant.

Selon une première alternative du procédé, le premier substrat est du papier ou du carton. A l'issue de l'étape f) est obtenu un matériau composite constitué de papier ou de carton, dont au moins une zone est recouverte d'un film de PHA.

Grâce à ce film, le papier ou le carton acquiert des propriétés barrière (eau, huile et/ou gaz), ce qui le rend particulièrement apte à être utilisé comme emballage.

Ce matériau composite est intégralement biodégradable en compost industriel. Le matériau composite peut servir de source de nourriture pour les souches de bactéries produisant le PHA. C'est un cycle de vie vertueux s'inscrivant dans une économie circulaire, durable et responsable.

L'inconvénient d'utiliser du papier ou du carton comme premier substrat est que l'application du surnageant sur au moins une partie de sa surface lors de l'étape d) conduit à mouiller le papier ou le carton, ce qui peut dégrader certaines de ses propriétés.

Ainsi, selon une deuxième alternative du procédé, le premier substrat n'est ni du papier, ni du carton. Typiquement, le procédé comprend alors, après l'étape f), une étape h) consistant à transférer le film de PHA sur un substrat de nature différente du premier substrat.

Ce transfert peut comprendre les étapes consistant à :
h1) chauffer le premier substrat dont ladite au moins une zone est recouverte d'un film de PHA,
h2) placer au moins une partie de la surface d'un substrat de nature différente du premier substrat sur le film de PHA de manière à obtenir un matériau multicouches dans lequel le film est localisé entre le premier substrat et le substrat de nature différente du premier substrat,
h3) ôter le premier substrat du matériau multicouches, ce par quoi est obtenu un substrat, de nature différente du premier substrat, et dont au moins une partie de la surface est recouverte d'un film de PHA.

Par exemple, le premier substrat est en verre, en céramique, en papier sulfurisé ou téfloné ou en métal et le substrat de nature différente du premier substrat est en papier ou en carton. L'utilisation d'un premier substrat en papier sulfurisé ou téfloné est avantageuse en ce que le film est facile à décoller, ce qui facilite sa récupération.

A la fin du procédé selon cette deuxième alternative, on obtient donc également un matériau composite constitué de papier ou de carton dont au moins une partie de la surface est recouverte du film. Les avantages mentionnés ci-dessus restent valables. Un avantage supplémentaire est que le papier ou le carton n'a pas été mouillé lors du procédé.

Les exemples ci-après illustrent le procédé selon l'invention

Dans les exemples ci-dessous, le PHA provenait de NaturePlast, sous la référence PHI 003.

Le microscope à balayage utilisé était un MEB-FEG Ultra 55, commercialisé par l'entreprise Zeiss.

### Exemple 1 : Procédé de préparation d'un film de PHA sur une coupelle en aluminium

Le protocole suivant a été suivi :
- Préparer une suspension à 5% en poids de PHA dans l'eau en mélangeant 1,5 g de PHA dans 30 g d'eau et agiter la suspension jusqu'à obtenir une apparence laiteuse homogène (étape a))
- Laisser reposer la suspension 3 minutes (étape b))
- Prélever le surnageant (étape c))
- Déposer le surnageant au fond d'une coupelle en aluminium (premier substrat), jusqu'à ce que la surface au fond de la coupelle soit entièrement couverte de surnageant (étape d))
- Laisser évaporer (ex : 6 g de surnageant met environ 36 h à s'évaporer entièrement à température ambiante (20°C)) (étape e))
- Alternativement, placer la coupelle sur une plaque chauffante ou dans un four pour accélérer l'évaporation
Une fois le surnageant évaporé, un dépôt de PHA blanc est visible.
- Préchauffer une plaque chauffante à 200°C
- déposer la coupelle contenant le dépôt de PHA sur la plaque chauffante pour un temps maximal de 5 minutes, ce par quoi un film se forme (étape f))
- Découper les contours de la coupelle afin de ne garder que le fond sur lequel repose le film
- Eventuellement, récupérer le film en retirant le fond de la coupelle (étape g)).

Le film de PHA obtenu faisait 7,75 µm d'épaisseur (moyenne sur trois mesures déterminées au microscope électronique à balayage avec un grandissement de x 500).

### Exemple 2 : Transfert du film de l'exemple 1 sur un papier

Le protocole suivant a été suivi :
- Placer la coupelle dont les contours ont été découpés et sur le fond duquel repose le film sur une plaque chauffante stabilisée à 200°C (étape h1))
- Une fois le film fondu, déposer du papier sur le film fondu pour obtenir un matériau multicouches aluminium/film de PHA/papier (étape h2)) (le substrat différent du premier substrat est donc du papier dans cet exemple)
- Faire rouler un rouleau sur la surface du papier
- Oter le matériau multicouches aluminium/film de PHA/papier de la plaque chauffante, et le laisser refroidir à température ambiante (20°C) pendant au moins 60 minutes (le temps que le PHA cristallise, favorisant son décollement l'aluminium)
- retirer l'aluminium pour obtenir un papier dont la surface est recouverte d'un film de PHA (étape h3)).

Les trois premières étapes simulent l'action d'une thermopresse. Dans un contexte industriel, l'utilisation d'une thermopresse ou de rouleaux de calandrages est privilégiée.

### Exemple 3 : Impact de la concentration en PHA dans la suspension préparée à l'étape a) et de la durée de l'étape b) sur la concentration en PHA dans le surnageant

La concentration massique en PHA dans le surnageant a été déterminée en fonction :
- de la concentration massique en PHA dans la suspension préparée à l'étape a) et
- de la durée de l'étape b) de repos (durée entre la préparation de la suspension et le prélèvement du surnageant).

Les résultats sont fournis dans le tableau 1.

**[Tableau 1]**

| Concentration initiale massique en PHA dans la suspension préparée à l'étape a) (en %wt PHA) | Durée de l'étape b) | |
|---|---|---|
| | 0 minutes | 3 minutes |
| 0,5 | 0,24 | 0,11 |
| 1 | 0,43 | 0,17 |
| 3 | 1,55 | 0,34 |
| 5 | 2,1 | 0,36 |
| 10 | 6,3 | 0,8 |

| | | |
|---|---|---|
| Concentration massique (en %wt PHA par rapport au poids d'eau) de PHA dans le surnageant en fonction de la concentration initiale en PHA dans la suspension préparée à l'étape a) et de la durée de l'étape b). | | |

Les résultats montrent que la concentration massique en PHA dans le surnageant dépend de la concentration initiale massique en PHA dans la suspension préparée à l'étape a).

Lorsque l'étape b) de repos est absente (durée de 0 min : le surnageant est prélevé juste après préparation de la suspension), la concentration en PHA au sein du surnageant évolue de façon quasi linéaire avec la concentration initiale massique en PHA dans la suspension préparée à l'étape a).

Par contre, après trois minutes de repos, une concentration en PHA identique et de l'ordre 0,35% massique (soit 3,5 mg/ml) dans le surnageant est obtenue, que la concentration initiale massique en PHA dans la suspension préparée à l'étape a) soit de 3% ou de 5 % par rapport au poids de solution aqueuse.

Cela signifie qu'une suspension ayant une concentration initiale de PHA de 5% en poids peut être préparée, le surnageant prélevé, et le culot réutilisé pour reformer une suspension jusqu'à ce que la concentration dans la suspension tombe à 3%, sans que la concentration en PHA dans le surnageant ne soit modifiée.

Pour démontrer que la concentration dans le surnageant est faible, une suspension à 5% de PHA en poids a été préparée en mélangeant 1,5 g de PHA à 30 g d'eau, soit une concentration équivalente à 50 mg/ml. Dans le surnageant, après 3 minutes de repos, la concentration était de 3,6 mg/ml, soit une concentration 14 fois plus faible.

Obtenir une suspension à 3,6 mg/ml de PHA dans l'eau nécessiterait de mélanger 85 mg de PHA à 30 g d'eau. Or, les 85 mg de PHA n'ont pas pu être mélangés de manière homogène à l'eau, cela à cause de l'immiscibilité du PHA dans l'eau. Une aussi faible concentration de PHA n'a pu être obtenue qu'en préparant une suspension initialement bien plus concentrée, en la laissant au repos et en récupérant le surnageant.

Cela démontre l'intérêt de préparer une suspension concentrée initialement, puis de récupérer le surnageant pour pouvoir obtenir une suspension de PHA à faible concentration, qui ne peut être préparée autrement.

Les films de PHA obtenus à partir de suspension de 3 ou 5 % de PHA en poids par rapport au poids de solution aqueuse faisaient environ 10 micromètres d'épaisseur telle que mesurée par MEB.

### Exemple 4 : Taille des particules de PHA dans le surnageant en fonction du temps de l'étape b) et de la minéralisation de l'eau utilisée pour préparer la suspension

La poudre de PHA sèche utilisée comme produit de départ contient des agglomérats de particules ayant des tailles allant de la centaine de microns à des tailles inférieures au micromètre, mesurées par microscopie électronique (MEB).

Lors de la préparation de la suspension (étape a)), la taille maximale des particules de PHA en suspension dépend de la minéralisation de l'eau. Plus l'eau est minérale, plus la taille des particules de PHA est faible lors de la préparation de la suspension.

Par contre, les particules de PHA dans le surnageant sont plus grosses après 3 minutes de repos lorsque de l'eau minérale est utilisée.

La taille des particules dans le surnageant devient indépendante de la minéralisation de l'eau utilisée à partir de 5 minutes de repos.

Le tableau 2 fournit l'évolution de la taille maximale des particules en fonction de la durée de repos de l'étape b) et de la minéralisation de l'eau. La concentration initiale en PHA dans la suspension préparée à l'étape a) était de 5% en poids par rapport au poids de solution aqueuse dans tous les cas.

**[Tableau 2]**

| Durée de repos de l'étape b) (min) | Eau déminéralisée | Eau du robinet (Equivalent à de l'eau déminéralisée contenant 0.01M (environ 0,5g/L) de CaCl₂ dihydrate) | Eau minérale (contenant 0.1M (environ 2g/L) de CaCl₂ dihydrate) |
|---|---|---|---|
| 0 | 140 | 103,5 | 89 |
| 1 | 108,2 | 74,8 | 65 |
| 3 | 12,2 | 7,7 | 35,5 |
| 5 | 10,4 | 10,4 | 10,4 |
| 10 | 10,4 | 12,2 | 8,9 |

| | | | |
|---|---|---|---|
| Taille maximale des particules dans le surnageant obtenu à partir d'une suspension de PHA à 5%wt par rapport au poids de solution aqueuse. | | | |

Ces résultats montrent que la minéralisation de l'eau impacte la taille des particules, mais qu'à partir d'un temps de sédimentation de 5 minutes, il est possible d'obtenir la même taille de particules quelle que soit la solution aqueuse utilisée. En conclusion, il est possible d'ajouter des minéraux dans la solution de PHA sans avoir à modifier le protocole, ce qui est un avantage en termes de coût et de temps de production.

### Exemple 5 : Cinétique de sédimentation en fonction de la minéralisation de l'eau

Une suspension a été préparée comme décrit à l'exemple 1. La suspension a été agitée, puis placée dans une chambre noire. La suspension était éclairée uniformément, et des photos étaient prises à intervalles de temps régulier. Sur chaque photo, l'intensité était prélevée sur une ligne verticale. Lorsque le PHA sédimente dans le culot, la couleur passe de blanc à noir, ce qui permet de suivre la sédimentation du PHA. Chaque intensité extraite a été reportée sur un graphe ou l'abscisse représente le temps, et l'ordonnée la valeur de l'intensité. Cela forme donc une cartographie temporelle de la sédimentation. La sédimentation était régulière et linéaire avec le temps, et en accord avec un profil classique, dit « barométrique », de sédimentation de particules solides immiscibles. La sédimentation était terminée au bout de 16 à 17 heures.

L'expérience a été reproduite pour une suspension dont la phase aqueuse était une solution aqueuse de CaCl₂. Le protocole de l'exemple 1 a été suivi, sauf que 0,3 mL d'une solution de CalCl₂ a 1M a été ajouté à l'eau lors de l'étape a), permettant d'obtenir une suspension de PHA dans une solution aqueuse à 0,1M de CaCl₂. La cinétique de sédimentation a été suivie de la même façon. Dans ce cas, la sédimentation a été terminée au bout de 30 minutes.

L'ajout d'ions, et notamment d'ions « lourds » (Ca²⁺, Mg²⁺) accélère la sédimentation lors de l'étape b). Sans vouloir être lié par une théorie particulière, les inventeurs supposent que ces ions créent un lien entre deux molécules de PHA. Cela a pour conséquence de créer des agrégats plus gros, donc plus lourd, sédimentant alors plus vite.

La durée de sédimentation dépend donc de la nature de la solution aqueuse. La durée optimale de l'étape b) également. Le surnageant doit être prélevé avant que la sédimentation ne soit totale.

## Revendications

1. Procédé de préparation d'un film de PHA comprenant les étapes consistant à :
a) mélanger un PHA sous forme pulvérulente et de formule (I) suivante :
H-[CHR-CH₂-COO]ₙ-H (I)
dans laquelle :
- chaque R représente indépendamment un alkyle linéaire ou ramifié comprenant de 1 à 12 atomes de carbone,
- n est un nombre entier supérieur ou égal à 2 représentant le nombre d'unités dans le PHA,
et une solution aqueuse pour obtenir une suspension comprenant 0,5 à 15% en poids, de préférence de 3 à 10% en poids, de PHA par rapport au poids de solution aqueuse,
b) laisser reposer la suspension de PHA, de 10 secondes à 16 heures, ce par quoi une partie du PHA sédimente et un culot est obtenu, au-dessus duquel surnage un surnageant comprenant de 0,1 à 1,0% en poids de PHA par rapport au poids de solution aqueuse,
c) prélever au moins une partie du surnageant,
d) appliquer le surnageant prélevé sur au moins une partie plane et horizontale d'une surface d'un premier substrat,
e) évaporer l'eau du surnageant appliqué,
f) simultanément à l'étape e) ou après l'étape e), chauffer au moins une zone de la partie de la surface du premier substrat sur laquelle le surnageant a été appliqué, de préférence à une température :
- supérieure à la (température de fusion spécifique du PHA + 5 °C), de préférence supérieure à la (température de fusion spécifique du PHA +15 °C), et
- inférieure à la (température de dégradation du PHA - 10°C),
ce par quoi est obtenu un premier substrat dont ladite au moins une zone est recouverte d'un film de PHA,
le diamètre moyen de particules de PHA sous forme pulvérulente utilisé à l'étape a) étant de 0,1 à 1 µm tel que mesuré par microscopie électronique (MEB).

2. Procédé selon la revendication 1, dans lequel la solution aqueuse utilisée à l'étape
a) comprend un ou plusieurs composants choisis parmi :
- des polymères, par exemple des polysaccharides, comme la pectine,
- des tensioactifs, de préférence des tensioactifs biosourcés, et/ou
- des sels, notamment des sels d'ions alcalins, alcalinoterreux ou métalliques, par exemple des ions calcium ou magnésium.

3. Procédé selon l'une quelconque des revendications 1 à 2, dans lequel le film de PHA a une épaisseur de 1 à 60 µm, typiquement de 2 à 50 µm, notamment de 3 à 30 µm, de préférence de 5 à 25 µm, telle que mesurée par microscopie électronique à balayage.

4. Procédé selon l'une quelconque des revendications 1 à 3, dans lequel le premier substrat est du papier ou du carton.

5. Procédé selon l'une quelconque des revendications 1 à 3, comprenant, après l'étape f), une étape g) consistant à récupérer le film de PHA.

6. Procédé selon l'une quelconque des revendications 1 à 3, comprenant, après l'étape f), une étape h) consistant à transférer le film de PHA sur un substrat de nature différente du premier substrat.

7. Procédé selon la revendication 6, dans lequel l'étape h) comprend les étapes consistant à :
h1) chauffer le premier substrat dont ladite au moins une zone est recouverte d'un film de PHA,
h2) placer au moins une partie de la surface d'un substrat de nature différente du premier substrat sur le film de PHA de manière à obtenir un matériau multicouches dans lequel le film de PHA est localisé entre le premier substrat et le substrat de nature différente du premier substrat,
h3) ôter le premier substrat du matériau multicouches, ce par quoi est obtenu un substrat, de nature différente du premier substrat, dont au moins une partie de la surface est recouverte d'un film de PHA.

8. Procédé selon la revendication 6 ou 7, dans lequel le premier substrat est en verre, en céramique, en papier sulfurisé ou téfloné ou en métal et le substrat de nature différente du premier substrat est en papier ou en carton.

9. Procédé selon l'une quelconque des revendications 1 à 8, comprenant les étapes consistant à :
a') après l'étape c), mélanger le culot, éventuellement avec la partie du surnageant n'ayant pas été prélevée à l'étape c), avec une solution aqueuse, pour obtenir une deuxième suspension comprenant de 0,5 à 15% en poids, de préférence de 3 à 10% en poids, de PHA par rapport au poids de solution aqueuse,
b') laisser reposer la deuxième suspension de PHA, généralement de 10 secondes à 16 heures, ce par quoi un deuxième culot est obtenu, au-dessus duquel surnage un deuxième surnageant comprenant de 0,1 à 1,0% en poids de PHA par rapport au poids de solution aqueuse,
c') prélever au moins une partie du deuxième surnageant,
d') appliquer le deuxième surnageant prélevé sur au moins une partie plane et horizontale d'une surface d'un deuxième substrat,
e') évaporer l'eau du deuxième surnageant,
f') simultanément à l'étape e') ou après l'étape e'), chauffer au moins une zone de la partie de la surface du deuxième substrat sur laquelle le deuxième surnageant a été appliqué, à une température supérieure à la température de fusion du PHA, de préférence à une température :
- supérieure à la (température de fusion spécifique du PHA + 5 °C), de préférence supérieure à la (température de fusion spécifique du PHA +15 °C), et
- inférieure à la (température de dégradation du PHA - 10°C),
ce par quoi est obtenu un deuxième substrat dont ladite au moins une zone est recouverte d'un film de PHA.

## Patentansprüche

1. Verfahren zur Vorbereitung eines Films aus PHA, umfassend die Schritte, die aus Folgendem bestehen:
a) Mischen eines PHAs in Pulverform und folgender Formel (I) :
H-[CHR-CH₂-COO]ₙ-H (I)
wobei:
- jedes R unabhängig ein lineares oder verzweigtes Alkyl darstellt, das 1 bis 12 Kohlenstoffatome umfasst,
- n eine ganze Zahl größer oder gleich 2 ist, die die Anzahl der Einheiten in dem PHA darstellt, und eine wässrige Lösung, um eine Suspension zu erhalten, die 0,5 bis 15 Gew.-%, vorzugsweise 3 bis 10 Gew.-%, von PHA bezogen auf das Gewicht der wässrigen Lösung umfasst,
b) Ruhenlassen der PHA-Suspension 10 Sekunden bis 16 Stunden, wodurch ein Teil des PHAs sedimentiert und ein Bodensatz erhalten wird, über dem ein Überstand besteht, der 0,1 bis 1,0 Gew.-% PHA im Verhältnis zu dem Gewicht der wässrigen Lösung umfasst,
c) Entnehmen mindestens eines Teils des Überstands,
d) Aufbringen des entnommenen Überstands auf mindestens einen ebenen und horizontalen Teil einer Oberfläche eines ersten Substrats,
e) Verdampfen des Wassers des aufgetragenen Überstands,
f) gleichzeitig mit Schritt e) oder nach Schritt e), Erwärmen mindestens eines Bereichs des Teils der Oberfläche des ersten Substrats, auf den der Überstand aufgetragen wurde, vorzugsweise auf eine Temperatur:
- höher als die (PHA-spezifische Schmelztemperatur +5 °C), vorzugsweise höher als die (PHA-spezifische Schmelztemperatur +15 °C), und
- niedriger als die (Abbautemperatur des PHAs - 10 °C),
wodurch ein erstes Substrat erhalten wird, dessen mindestens ein Bereich mit einem PHA-Film bedeckt ist,
wobei der in Schritt a) verwendete mittlere Durchmesser von PHA-Partikeln in Pulverform 0,1 bis 1 µm beträgt, gemessen mittels Elektronenmikroskopie (REM).

2. Verfahren nach Anspruch 1, wobei die in Schritt a) verwendete wässrige Lösung eine oder mehrere Komponenten umfasst, die ausgewählt sind aus:
- Polymeren, beispielsweise Polysacchariden, wie Pektin,
- Tensiden, vorzugsweise biobasierten Tensiden, und/oder
- Salzen, insbesondere Salzen von Alkali-, Erdalkali- oder Metallionen, beispielsweise Calcium- oder Magnesiumionen.

3. Verfahren nach einem der Ansprüche 1 bis 2, wobei der PHA-Film eine Dicke von 1 bis 60 µm, typischerweise von 2 bis 50 µm, insbesondere von 3 bis 30 µm, vorzugsweise von 5 bis 25 µm, wie mittels Rasterelektronenmikroskopie gemessen, aufweist.

4. Verfahren nach einem der Ansprüche 1 bis 3, wobei das erste Substrat Papier oder Pappe ist.

5. Verfahren nach einem der Ansprüche 1 bis 3, umfassend, nach Schritt f), einen Schritt g), der darin besteht, den PHA-Film zurückzugewinnen.

6. Verfahren nach einem der Ansprüche 1 bis 3, umfassend nach Schritt f) einen Schritt h), der darin besteht, den PHA-Film auf ein Substrat anderer Art als das erste Substrat zu übertragen.

7. Verfahren nach Anspruch 6, **dadurch gekennzeichnet, dass** Schritt h) die Schritte umfasst, die aus Folgendem bestehen:
h1) Erwärmen des ersten Substrats, dessen mindestens ein Bereich mit einem PHA-Film bedeckt ist,
h2) Legen mindestens eines Teils der Oberfläche eines Substrats anderer Art als des ersten Substrats auf den PHA-Film, um ein mehrschichtiges Material zu erhalten, bei dem der PHA-Film zwischen dem ersten Substrat und dem Substrat anderer Art als des ersten Substrats lokalisiert ist,
h3) Entfernen des ersten Substrats von dem mehrschichtigen Material, wodurch ein Substrat erhalten wird, das sich von dem ersten Substrat unterscheidet, dessen Oberfläche mindestens teilweise mit einem PHA-Film bedeckt ist.

8. Verfahren nach Anspruch 6 oder 7, wobei das erste Substrat aus Glas, Keramik, Backpapier oder Teflon oder Metall besteht und das Substrat anderer Art als das erste Substrat aus Papier oder Pappe besteht.

9. Verfahren nach einem der Ansprüche 1 bis 8, umfassend die Schritte, die aus Folgendem bestehen:
a') nach Schritt c) Mischen des Bodensatzes, gegebenenfalls mit dem Teil des Überstands, der in Schritt c) nicht entnommen wurde, mit einer wässrigen Lösung, um eine zweite Suspension zu erhalten, die 0,5 bis 15 Gew.-%, vorzugsweise 3 bis 10 Gew.-%, von PHA bezogen auf das Gewicht der wässrigen Lösung umfasst,
b') Ruhenlassen der zweiten PHA-Suspension im Allgemeinen 10 Sekunden bis 16 Stunden, wodurch ein zweiter Bodensatz erhalten wird, über dem ein zweiter Überstand mit 0,1 bis 1,0 Gew.-% PHA bezogen auf das Gewicht der wässrigen Lösung übersteht,
c') Entnehmen mindestens eines Teils des zweiten Überstands,
d') Aufbringen des zweiten entnommenen Überstands auf mindestens einen ebenen und horizontalen Teil einer Oberfläche eines zweiten Substrats,
e') Verdampfen des Wassers des zweiten Überstands,
f') gleichzeitig mit Schritt e') oder nach Schritt e'), Erwärmen mindestens eines Bereichs des Oberflächenabschnitts des zweiten Substrats, auf den der zweite Überstand aufgetragen wurde, auf eine Temperatur, die über der Schmelztemperatur des PHAs liegt, vorzugsweise auf eine Temperatur:
- höher als die (PHA-spezifische Schmelztemperatur +5 °C), vorzugsweise höher als die (PHA-spezifische Schmelztemperatur +15 °C), und
- niedriger als die (Abbautemperatur des PHAs - 10 °C),
wodurch ein zweites Substrat erhalten wird, dessen mindestens ein Bereich mit einem PHA-Film bedeckt ist.

## Claims

1. Method for preparing a PHA film comprising the steps consisting in:
a) mixing a PHA in powder form with the following formula (I):
H-[CHR-CH₂-COO]ₙ-H (I)
wherein:
- each R represents independently a linear or branched alkyl comprising from 1 to 12 carbon atoms,
- n is an integer number greater than or equal to 2 representing the number of units in the PHA,
and an aqueous solution to obtain a suspension comprising from 0.5 to 15% by weight, preferably from 3 to 10% by weight, of PHA with respect to the weight of aqueous solution,
b) leaving the PHA solution to rest, for 10 seconds to 16 hours, by means of what a portion of the PHA settles out and a pellet is obtained, above which floats a supernatant comprising from 0.1 to 1.0% by weight of PHA with respect to the weight of aqueous solution,
c) collecting at least part of the supernatant,
d) applying the collected supernatant to at least one flat horizontal portion of a surface of a first substrate,
e) evaporating the water from the applied supernatant,
f) simultaneously with step e) or after step e), heating at least one region of the portion of the surface of the first substrate to which the supernatant was applied, at a temperature preferably:
- higher than the (specific melting point of the PHA + 5°C), preferably higher than the (specific melting point of the PHA + 15°C), and
- lower than the (degradation temperature of the PHA - 10°C),
by means of what a first substrate is obtained having said at least one region covered with a PHA film,
the mean diameter of PHA particles in powder form used at step a) being of from 0.1 to 1 µm as measured by electron microscopy (SEM).

2. Method according to claim 1, wherein the aqueous solution used at step a) comprises one or more components selected from:
- polymers, for example polysaccharides, such as pectin,
- surfactants, preferably biosourced surfactants, and/or
- salts, in particular alkaline-ion, alkaline-earth or metal salts, for example calcium or magnesium ions.

3. Method according to any one of claims 1 to 2, wherein the PHA film has a thickness of from 1 to 60 µm, typically from 2 to 50 µm, in particular from 3 to 30 µm, preferably from 5 to 25 µm, as measured by scanning electron microscopy.

4. Method according to any one of claims 1 to 3, wherein the first substrate is paper or cardboard.

5. Method according to any one of claims 1 to 3, comprising, after step f), a step g) consisting in recovering the PHA film.

6. Method according to any one of claims 1 to 3, comprising, after step f), a step h) consisting in transferring the PHA film onto a substrate with a nature different from the first substrate.

7. Method according to claim 6, wherein step h) comprises the steps consisting in:
h1) heating the first substrate, said at least one region of which is covered with a PHA film,
h2) placing at least a portion of the surface of a substrate with a nature different from the first substrate on the PHA film so as to obtain a multilayer material in which the PHA film is located between the first substrate and the substrate with a nature different from the first substrate,
h3) removing the first substrate from the multilayer material, by means of what a substrate is obtained with a nature different from the first substrate, and at least a portion of the surface of which is covered with a PHA film.

8. Method according to claim 6 or 7, wherein the first substrate is made from glass, from ceramic, from sulphurized or Teflon-coated paper or from metal, and the substrate with a nature different from the first substrate is made from paper or from cardboard.

9. Method according to any one of claims 1 to 8, comprising the steps consisting in:
a') after step c), mixing the pellet, optionally with the portion of the supernatant that was not collected at step c), with an aqueous solution to obtain a second suspension comprising from 0.5 to 15% by weight, preferably from 3 to 10% by weight, of PHA with respect to the weight of aqueous solution,
b') leaving the second suspension of PHA to rest, generally for 10 seconds to 16 hours, by means of what a second pellet is obtained, above which floats a second supernatant comprising from 0.1 to 1.0% by weight of PHA with respect to the weight of aqueous solution,
c') collecting at least a portion of the second supernatant,
d') applying the collected second supernatant to at least one flat horizontal portion of a surface of a second substrate,
e') evaporating the water from the second supernatant,
f') simultaneously with step e') or after step e'), heating at least one region of the portion of the surface of the second substrate to which the second supernatant was applied, at a temperature higher than the melting point of the PHA, preferably at a temperature:
- higher than the (specific melting point of the PHA + 5°C), preferably higher than the (specific melting point of the PHA + 15°C), and
- lower than the (degradation temperature of the PHA - 10°C),
by means of what a second substrate is obtained having said at least one region covered with a PHA film.
